(19) Europäisches Patentamt
European Patent Office
Office européen des brevets

(11) **EP 2 013 069 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(21) Anmeldenummer: **07728580.7**

(22) Anmeldetag: **26.04.2007**

(51) Int Cl.:
**B62D 6/00** (2006.01)  **B62D 7/15** (2006.01)
**B62D 7/00** (2006.01)  **B60W 50/16** (2012.01)

(86) Internationale Anmeldenummer:
**PCT/EP2007/054125**

(87) Internationale Veröffentlichungsnummer:
**WO 2007/125083 (08.11.2007 Gazette 2007/45)**

(54) **VERFAHREN UND VORRICHTUNG ZUM ERMITTELN EINES OPTIMALEN LENKWINKELS IN UNTERSTEUERSITUATIONEN EINES FAHRZEUGS**

METHOD AND SYSTEM FOR DETERMINING AN OPTIMAL STEERING ANGLE IN UNDERSTEER SITUATIONS IN A VEHICLE

PROCÉDÉ ET DISPOSITIF DE DÉTERMINATION D'UN ANGLE DE BRAQUAGE OPTIMAL LORS DE SITUATIONS DE SOUS-VIRAGE D'UN VÉHICULE

(84) Benannte Vertragsstaaten:
**DE FR**

(30) Priorität: **27.04.2006 DE 102006020279**
**26.04.2007 DE 102007020169**

(43) Veröffentlichungstag der Anmeldung:
**14.01.2009 Patentblatt 2009/03**

(73) Patentinhaber: **Continental Teves AG & Co. OHG**
**60488 Frankfurt (DE)**

(72) Erfinder:
• **LAUER, Peter**
 **61184 Karben (DE)**
• **RASTE, Thomas**
 **61440 Oberursel (DE)**

(56) Entgegenhaltungen:
**EP-A2- 1 225 109    DE-A1- 10 039 782**
**DE-A1-102005 012 548**

**Beschreibung**

Die Erfindung betrifft ein Verfahren zum Ermitteln eines optimalen Lenkwinkels in Untersteuersituationen eines Fahrzeugs.

Die Erfindung betrifft zudem eine Vorrichtung zum Ermitteln eines optimalen Lenkwinkels in Untersteuersituationen eines Fahrzeugs.

Moderne Fahrzeuge verwenden elektronisch ansteuerbare Motoren im Lenkstrang einerseits zur gezielten Beeinflussung des vom Fahrer aufzubringenden Lenkmoments (Servolenkungen) und andererseits zur gezielten Einstellung von Lenkwinkeln unabhängig vom Fahrer (Überlagerungslenkungen). Neben diesen Lenkungen, die auf die Vorderachse des Fahrzeugs wirken, verwenden moderne Fahrwerkregelungen wie z.B. Global Chassis Control (GCC) auch Hinterachslenkungen zur Regelung der Fahrdynamik.

Zur Beeinflussung des vom Fahrer aufzubringenden Lenkmoments sind verschiedene, jeweils auf die spezielle Fahrsituation ausgerichtete Regelungs- bzw. Steuerungsstrukturen bekannt. Es wird z.B. bei übersteuernden Fahrsituationen eine Regelung auf Basis einer Gierraten-Referenz (WO 2005/054039 A1) und bei Bremsen auf μ-Split eine Steuerung auf Basis von ABS-Radinformationen eingesetzt (WO 2005/054040 A1). Bei untersteuernden Fahrsituationen wird der beim Erkennen der Situation vorliegende Lenkwinkel "eingefroren", d.h. durch eine Momentenregelung soll dem Fahrer die Empfehlung gegeben werden, den Lenkwinkel nicht zu vergrößern und dadurch in der Folge die Situation zu verschlimmern. Nachteilig bei diesem Konzept ist, dass dem Fahrer keine Rückmeldung über die maximal mögliche Seitenkraft vermittelt wird.

Es wäre daher wünschenswert, wenn dem Fahrer dahingehend assistiert werden könnte, dass er eine maximale Seitenkraft an den Rädern einstellen kann.

Aus der DE 10 2005 036 708 A1 sind Stabilisierungsmittel bekannt, die die Lenkmittel in Abhängigkeit von einem Seitenkraftbeiwert mindestens eines der gelenkten Räder zur Einstellung eines das Fahrzeug stabilisierenden Lenkwinkels ansteuern, wobei die Stabilisierungsmittel einen Schräglaufwinkel der gelenkten Räder derart einstellen, dass der Seitenkraftbeiwert den Bereich des Maximums im wesentlichen nicht überschreitet.

In DE 100 39 782 A1 ist ein Verfahren nach dem Oberbegriff des Auspruchs 1 bekannt.

Der Erfindung liegt die Aufgabe zugrunde, ein Verfahren der eingangs genannten Art so zu verbessern, dass der Fahrer während einer untersteuernden Fahrsituation zuverlässig bei der Stabilisierung des Fahrzeugs unterstützt wird.

Erfindungsgemäß wird diese Aufgabe durch ein Verfahren nach dem Patentanspruch 1 sowie durch eine Vorrichtung nach dem Patentanspruch 8 gelöst.

Die Erfindung stellt ein Verfahren zum Ermitteln eines optimalen Lenkwinkels in Untersteuersituationen eines Fahrzeugs bereit, bei dem ein erster Anteil bei der Ermittlung berücksichtigt wird, der den Kraftschlussbeiwert in Querrichtung wiedergibt, bei dem ein zweiter Anteil berücksichtigt wird, der einen Kinematikanteil wiedergibt und bei dem ein dritter Anteil berücksichtigt wird, der den Schwimmwinkel wiedergibt und bei dem der Lenkwinkels $\delta_{V,lim}$ durch Addition des Kraftschlussbeiwertanteils, des Kinematikanteils und des Schwimmwinkels ermittelt wird.

Bei dem Kinematikanteil handelt es sich um die anteiligen Geschwindigkeiten aus der Fahrzeugdrehung bezogen auf die Schwerpunktgeschwindigkeit.

Das System zur Regelung von elektronisch ansteuerbaren Motoren im Lenkstrang ermöglichen dem Fahrer vorteilhaft in Untersteuersituationen durch Lenkhilfe das Seitenkraft-Maximum einzustellen. Durch diese Assistenz beim Lenken kann in kritischen Fahrsituationen eine Stabilisierung des Fahrzeugs erzielt werden. Hierbei finden Allradlenkungen Berücksichtigung.

Vorteilhaft kann der Schwimmwinkel beim Untersteuern nach der Beziehung $\beta \approx 0$ geschätzt werden, da der Schwimmwinkel am Beginn der untersteuernden Fahrsituation näherungsweise Null ist.

Vorteilhaft wird er Fahrbahnreibwert an den Achsen und dem Fahrzeugschwerpunkt ermittelt. Der Fahrbahnreibwert $\hat{\mu}_0 = \max(\mu_{VA}, \mu_{CoG}, \mu_{HA})$ wird nach mindestens einer der Beziehungen, mit der Kraftschlussausnutzung für die Vorderachse

$$\mu_{VA} = \frac{\sqrt{\left(a_x - l_v \dot{\psi}^2\right)^2 + \left(a_y + l_v \ddot{\psi}\right)^2}}{g} \, ,$$

oder mit der Kraftschlussausnutzung im Fahrzeugschwerpunkt

$$\mu_{CoG} = \frac{\sqrt{a_x^2 + a_y^2}}{g},$$

oder mit der Kraftschlussausnutzung an der Hinterachse

$$\mu_{HA} = \frac{\sqrt{\left(a_x + l_H \dot\psi^2\right)^2 + \left(a_y - l_H \ddot\psi\right)^2}}{g}.$$

ermittelt.

Vorteilhaft wird der optimale Lenkwinkel in einem Modell berechnet, in dem der Lenkwinkel betragsmäßig nach der Beziehung

$$\delta_{V,\lim} = \frac{l_V}{v_x}\left|\dot\psi\right| + \frac{2}{C_{\alpha 0}}\hat\mu_0$$

ermittelt wird.

Der Lenkwinkel $\delta_{V,\lim}$ oder ein mit einem Faktor k multiplizierter Lenkwinkel $\delta_{V,\lim}$ wird als Sollwert für eine Lenkwinkelregelung oder eine Lenkmomentregelung verwendet.

Weiterhin ist vorteilhaft vorgesehen, dass eine Lenkmomentregelung nach der Beziehung

$$\delta_{V,\lim} < |\delta_V|$$

aktiviert wird bzw. nach der Beziehung

$$\delta_{V,\lim} > |\delta_V|$$

deaktiviert wird.

Die Erfindung stellt überdies eine vorteilhafte Vorrichtung zur Durchführung des erfindungsgemäßen Verfahrens bereit.

Die Vorrichtung zum Ermitteln eines optimalen Lenkwinkels in Untersteuersituationen eines Fahrzeugs basiert auf einer Ermittlungseinheit zum Ermitteln eines stabilisierenden Lenkwinkels unter Berücksichtigung eines modellbasierten Kraftschlussbeiwertanteils, eines modellbasierten Kinematikanteil und eines Schwimmwinkels.

Weitere Vorteile und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt

Fig. 1    ein Blockschaltbild mit einer Übersicht eines Regelsystems einer elektrischen Servolenkung zur Ermittlung eines Lenkmoments,

Fig. 2    ein Blockschaltbild mit einer Übersicht über ein Regelsystem einer Überlagerungslenkung zur Ermittlung eines Lenkmoments,

Fig. 3    eine Ausgestaltung des in den Figuren 1 und 2 dargestellten Reglers mit den Regleranteilen die die Lenkung betreffen,

Fig. 4    eine Ausführungsform eines Blocks des in dem in der Figur 2 dargestellten Blockschaltbildes, der ein Lenkmoment ermittelt,

Fig. 5     eine erste Ausführungsform eines Blocks des in dem in der Figur 2 dargestellten Blockschaltbildes zum Ermitteln eines Zusatz-Lenkwinkels,

Fig. 6     eine Ausführungsform eines Blocks zur Störgrößenaufschaltung für den Lenkmomentregler,

Fig. 7     eine Darstellung der Bezugsgrößen an einem Fahrzeug mit den Modellen für die Ermittlung der Schräglauf- und dem Schwimmwinkel,

Fig. 8     eine Kennlinie des Kraftschlussbeiwertes in Querrichtung.

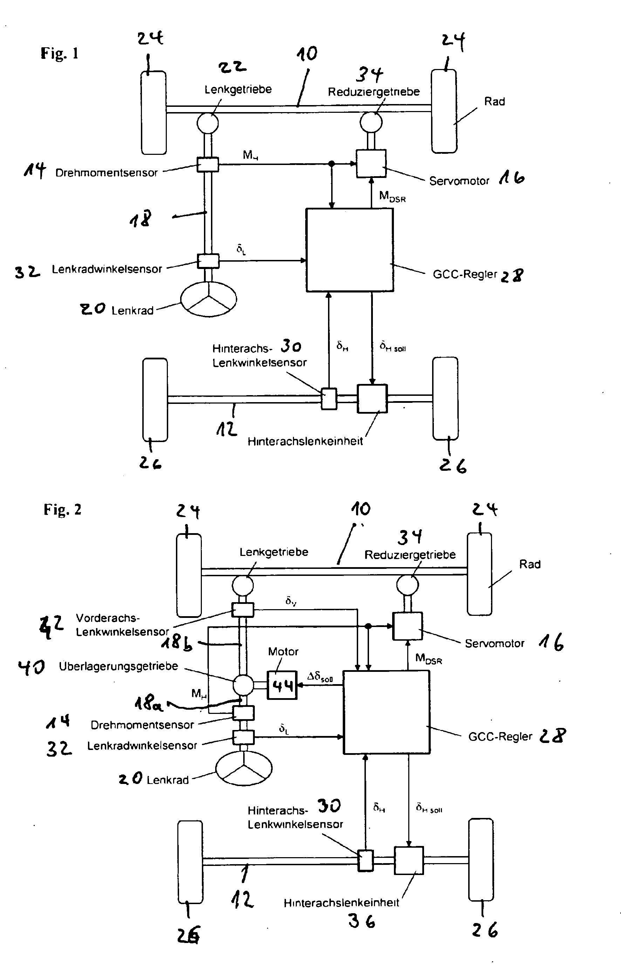

Es wird von einem zweiachsigen, vierrädrigen Kraftfahrzeug mit lenkbaren Rädern mindestens an einer Vorderachse 10 und ggf. auch an einer Hinterachse 12 ausgegangen. In Figur 1 ist ein Fahrzeug mit einem Lenksteller schematisch dargestellt. Ein an eine Lenksäule 18 befestigtes Lenkrad 20 ist über ein Lenkgetriebe 22 mit den gelenkten Rädern 24, 26 des Fahrzeugs verbunden. Das Lenkgetriebe 22 ist vorzugsweise als Zahnstangenlenkung ausgeführt, die ein nicht dargestelltes drehfest mit der Lenksäule verbundenes Ritzel aufweist. An der Lenksäule ist ein Drehmomentsensor 14 angeordnet, der den Fahrerlenkwunsch dabei anhand eines Handlenkmoments $M_H$ ermittelt. Ein elektrischer EPS Servomotor 16 (EPS = Electric Power Steering) beaufschlagt im konventionellen Betrieb den Lenkstrang mit einem zusätzlichen Lenkmoment $M_{DSR}$, welches das von dem Fahrer aufgebrachte Lenkmoment $M_H$ verstärkt.

Zum Einstellen einer Zusatzlenkmomentanforderung $M_{DSR}$ (DSR = Driver Steering Recommendation) zur Fahrerunterstützung wird die elektrische Servolenkung genutzt, die dabei von einem z.B. GCC-Regler 28(GCC= Global Chassis Control) beispielsweise über eine Schnittstelle zum CAN-Bus des Fahrzeugs angesteuert wird. Dem Regler 28 werden dabei der vom Fahrer eingestellte Lenkradwinkel $\delta_L$ und der Hinterachslenkwinkel $\delta_H$, die mit an der Lenksäule 18 und an der Hinterachse 12 angeordneten Lenkwinkelsensoren 30, 32 gemessen werden und das vom Drehmomentsensor 14 ermittelte Handlenkmoment $M_H$ als Eingangsgrößen zur Verfügung gestellt. Weiterhin erhält der Regler 28 zusätzliche Größen von Fahrdynamikreglern und/oder Fahrassistenzreglern, wie in den Eingangs genannten Anmeldungen näher beschrieben ist. Der Regler 28 ermittelt anhand der zur Verfügung gestellten Informationen das Zusatzlenkmoment $M_{DSR}$. Der EPS-Servomotor 16 dient dabei als Aktuator, der das Lenkmoment $M_{DSR}$ (DSR = Driver Steering Recommendation) in Korrelation mit dem Handlenkmoment $M_H$ über das Getriebe 34 in den Lenkstrang einbringt. Weiterhin berechnet der Regler 28 einen Hinterachslenkwinkel $\delta_{H,soll}$, der über eine Hinterachslenkeinheit 36 auf die Hinterachse übertragen wird.

In ähnlicher Weise kann die Erfindung jedoch auch in Fahrzeugen mit anderen Lenksystemen, wie beispielsweise Lenksystemen mit einer hydraulischen Servolenkung mit externer Momentenschnittstelle (z.B. APS, Active Power Steering) oder einem separaten Momentensteller (z.B. IPAS, Intelligent Power Assisted Steering) eingesetzt werden.

Figur 2 zeigt eine Servolenkung mit zwei Lenkstellern. Gleiche Bauteile bzw. gleiche Blöcke haben dabei die gleichen Bezugszeichen. An der Lenksäule 18 ist zusätzlich gegenüber der Ausbildung nach der Figur 1 ein Überlagerungsgetriebe 40 angeordnet. Das Überlagerungsgetriebe ist in der Regel als Planetengetriebe ausgeführt und teilt die Lenksäule in zwei Abschnitte 18a und 18b. Dem vom Lenkradwinkelsensor 32 gemessen Lenkradwinkel $\delta_L$ kann mittels des Überlagerungsgetriebes 40 ein weiterer Lenkwinkel überlagert werden. Der Summenlenkwinkel $\delta_V$ wird von dem an dem Abschnitt 18b der Lenksäule angeordneten Lenkwinkelsensor 42 gemessen. Angetrieben wird die Überlagerungslenkung 40 von einem Lenkradmotor 44. Geregelt wird der Lenkradmotor 44 von dem Regler 28, dessen Führungsgröße der Korrektur-Lenkradwinkel $\Delta\delta_{soll}$ ist. Hierzu wird dem Regler 28 der von dem Vorderachs-Lenkwinkelsensor 42 gemessene Lenkwinkel $\delta_V$ zur Verfügung gestellt. Ebenso wie das in Figur 1 beschriebene Regelsystem erhält der Regler 28 weitere Größen aus Fahrdynamikregelungen und/oder Fahrassistenzregelungen.

In das zusätzliche Lenkmoment $M_{DSR}$ geht der Radlenkwinkel der Vorderachse $\delta_V$ nach der Beziehung

$$\delta_V = \frac{\delta_L}{i_L} \qquad\qquad (2.1)$$

ein, wobei $i_L$ die Lenkübersetzung ist. Die Lenkübersetzung ist konstant oder kann im Falle einer Überlagerungslenkung auch von weiteren Größen, wie z.B. der Fahrzeuggeschwindigkeit, abhängen. Im Falle einer Lenkwinkelregelung wird der Radlenkwinkel der Vorderachse direkt gemessen.

Bei den in den Figuren 1 und 2 dargestellten Servomotoren 16 wird vorzugsweise vorausgesetzt, dass der Servomotor im Sinne eines "intelligenten Faktors" ein Soll-Lenkmoment vom GCC-Regler empfangen und dieses selbständig einregelt. Die aktuellen Handlenkmomente $M_H$ werden von dem Drehmomentsensor 14 erfasst und an den GCC-Regler 28 zurückmeldet. Der Drehmomentsensor 14 ist optional, ein IPAS enthält keinen Drehmomentsensor.

Das Vorhandensein einer Hinterachslenkung ist für das Verfahren nicht zwingend erforderlich. Die weiteren Ausführungen gehen jedoch davon aus, dass das Fahrzeug mit einer Hinterachslenkeinheit ausgestattet ist (z.B. ARK, Active Rear Axle Kinematics). Das Verfahren zur Berechnung des maximalen Lenkwinkels eignet sich auch für eine reine Überlagerungslenkung gemäß Figur 2, um diesen Wert unabhängig von der Fahrervorgabe einzuregeln.

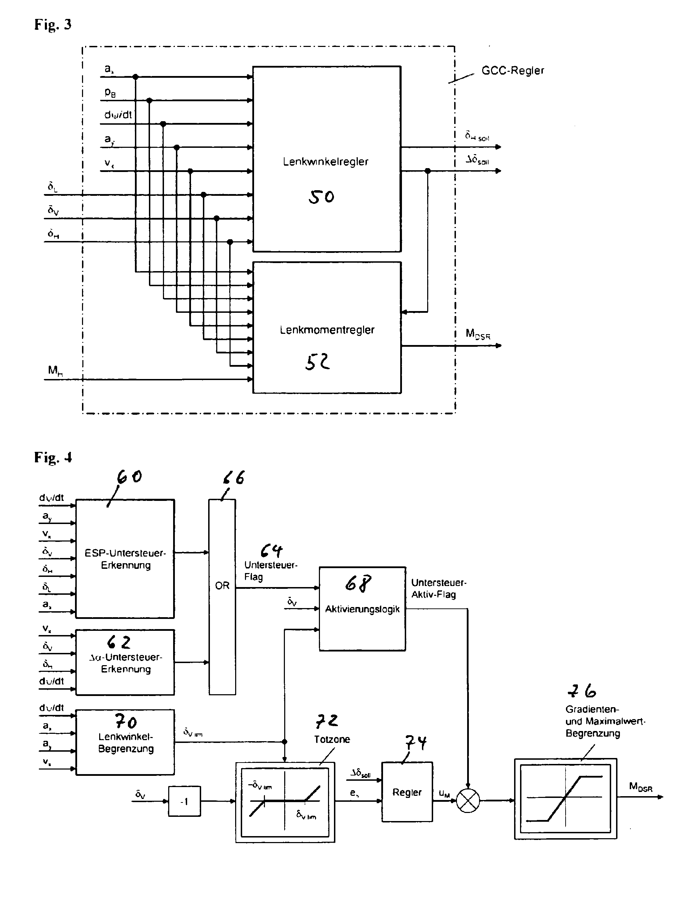

In Fig. 3 sind die Komponenten und Schnittstellen des GCC-Reglers 28 abgebildet. Dargestellt sind nur die Anteile, die die Lenkung betreffen. Nicht dargestellt sind Regleranteile für andere Aktoren, wie z.B. Bremse, Verbrennungsmotor, Stabilisator etc. Der Lenkwinkelregler 50 und der Lenkmomentregler 52 sind entweder alternativ vorhanden oder für Lenksysteme wie in Fig. 2 dargestellt gemeinsam vorhanden. Der Lenkwinkelregler 50 erzeugt Lenkwinkelsollwerte $\Delta\delta_{soll}$, $\delta_{H,soll}$ für die Vorderachse 10 und die Hinterachse 12. Der Lenkmomentregler 52 erzeugt das Zusatzlenkmoment $M_{DSR}$, das als Fahrerlenkempfehlung (DSR, Driver Steering Recommendation) eine haptische Rückmeldung für den Fahrer darstellt. Als Eingangsgrößen werden dem Lenkwinkelregler 50 und dem Lenkmomentregler 52 die folgenden Größen zur Verfügung gestellt:

| | |
|---|---|
| $a_x$ | Längsbeschleunigung, gemessen mit einem Längsbeschleunigungssensor oder geschätzt aus Raddrehzahlsignalen |
| $p_B$ | Bremsdruck, gemessen mit einem Drucksensor (1x Fahrer) oder an den Radbremsen der jeweiligen Rad 24, 26 oder in einem Modell für die vier Radbremsen der Räder 24,26 geschätzt |
| $d\psi / dt$ | Gierrate |
| $a_y$ | Querbeschleunigung |
| $v_x$ | Fahrzeuggeschwindigkeit, geschätzt aus Raddrehzahlsignalen |
| $\delta_L$ | Lenkradwinkel |
| $\delta_V$ | Radlenkwinkel Vorderachse |
| $\delta_H$ | Radlenkwinkel Hinterachse. |

Zusätzlich wird dem Lenkmomentregler 52 noch das von dem Drehmomentsensor 14 ermittelte Fahrerhandmoment $M_H$ als Eingangsgröße zugeführt. Falls auch der Lenkwinkelregler 50 vorhanden ist, dann wird dem Lenkmomentregler 52 zusätzlich die Soll-Radlenkwinkeländerung $\Delta\delta_{soll}$ als Eingangsgröße zugeführt.

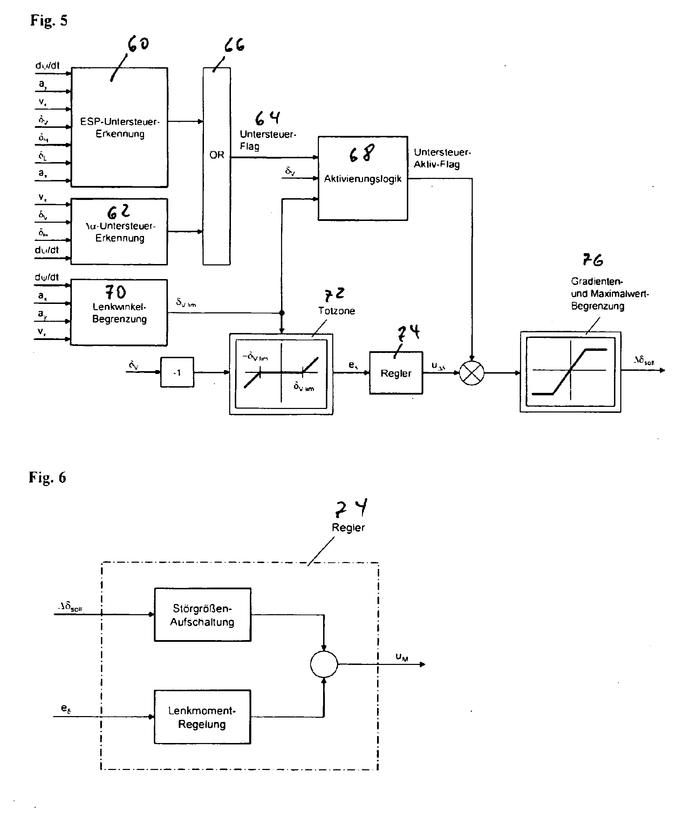

Ein Ausführungsbeispiel für den Lenkmomentregler 52 in Untersteuersituationen ist in Fig. 4 dargestellt. Ein Ausführungsbeispiel für den Lenkwinkelregler 50 in Untersteuersituationen zeigt Fig. 5.

Beide Regler 50, 52 weisen folgenden prinzipiellen Aufbau des Lenkstrang-Regelsystems zum Ermitteln der Lenkmomentanforderung $M_{DSR}$ oder der Lenkwinkelanforderung $\Delta\delta_{soll}$ auf. Fahrsituationen in denen ein untersteuernder Fahrzustand des Fahrzeugs vorliegt, werden in den Blöcken 60 und 62 erkannt. Diese greifen dabei insbesondere auf Informationen zurück, die durch einen Fahrdynamikregler bereitgestellt werden. Bei dem Fahrzustandsregler kann es sich beispielsweise um ein ESP- und/oder ein ABS-System handeln. Eine Erkennung von kritischen Fahrsituationen, in denen das Fahrzeug untersteuert, wird anhand einer ESP Untersteuererkennung vorzugsweise in dem Block 60 durchgeführt. In dem Block 62 wird alternativ ein Untersteuern des Fahrzeugs anhand einer Schräglaufwinkel-Untersteuerkennung erkannt.

Die Erkennung einer Untersteuersituation erfolgt bei beiden Reglern 50, 52 hier nach zwei Alternativen. Eine um den Hinterachslenkanteil erweiterte im ESP bestehende Untersteuererkennung verwendet das lineare stationäre Einspurmodell

$$\dot{\psi} = \frac{v_x}{l + EGv_x^2}(\delta_V - \delta_H) \,. \qquad (3.1)$$

Das Modell (3.1) liefert eine Referenz für den Vorderachslenkwinkel in der Form

$$\delta_{V,ref} = \frac{l}{v_x}\dot{\psi} + EGa_y + \delta_H \,. \qquad (3.2)$$

Ein Untersteuern wird festgestellt, wenn die Differenz

$$\left| \delta_V \right| - \left| \delta_{V,ref} \right| > S_\delta \qquad (3.3)$$

einen vorgegebenen Schwellenwert $S_\delta$ überschreitet. Die zweite Möglichkeit zur Untersteuererkennung basiert auf dem Schräglaufwinkel an der Vorderachse

$$\alpha_V = -\delta_V + \beta + \frac{l_V}{v_x}\dot{\psi}. \qquad (3.4)$$

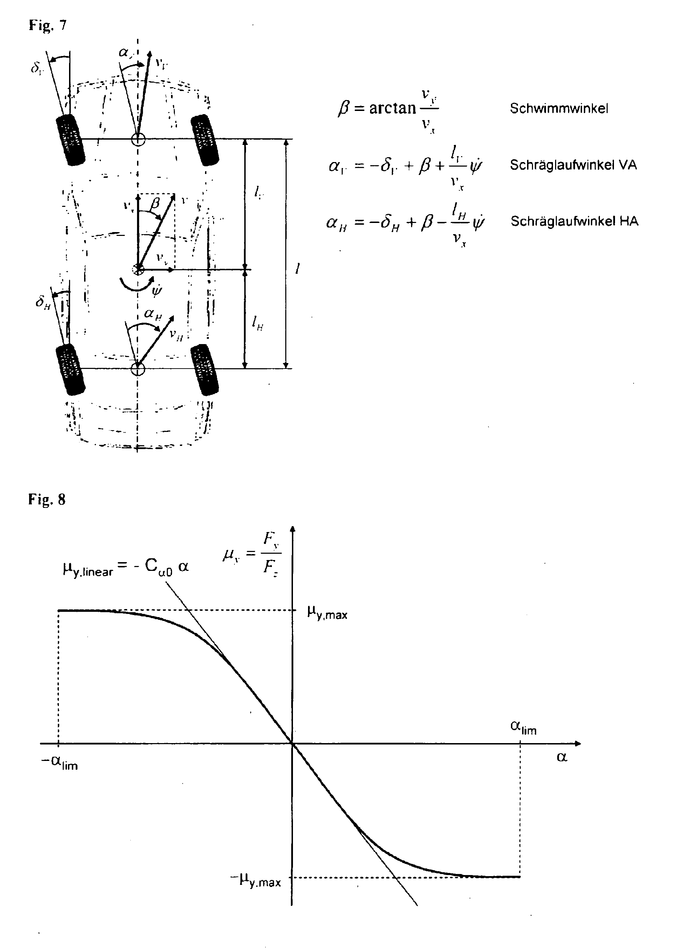

und dem Schräglaufwinkel an der Hinterachse, vgl. Fig. 7

$$\alpha_H = -\delta_H + \beta - \frac{l_H}{v_x}\dot{\psi}. \qquad (3.5)$$

Für die Erkennung werden nicht die einzelnen Schräglaufwinkel benötigt, sondern nur die Differenz

$$\Delta\alpha = \alpha_V - \alpha_H = \delta_H - \delta_V + \frac{l}{v_x}\dot{\psi}. \qquad (3.6)$$

In Abhängig von einem Schwellenwert für die Schräglaufwinkeldifferenz (3.6) und dem Vorzeichen der Gierrate wird ein Untersteuern erkannt, wenn gilt

$$d\psi/dt > 0 \textbf{ und } \Delta\alpha < -S_\alpha$$
$$\textbf{oder}$$
$$d\psi/dt < 0 \textbf{ und } \Delta\alpha > S_\alpha$$

Der Schwellenwert $S_\alpha$ liegt zwischen 2 und 10 Grad, vorzugsweise bei 5 Grad. Wird in einem der Blöcke 60, 62 eine Untersteuersituation anhand des Überschreitens der Schwellenwerte $S_\delta$ oder $S_\alpha$ erkannt, wird das Untersteuerflag 64, welches das Ausgangssignal des Blocks 60 oder 62 darstellt, auf den Wert 1 gesetzt. Das Untersteuerflag wird von dem Wert 1 auf den Wert 0 zurückgesetzt, wenn die genannten Bedingungen nicht mehr erfüllt sind. Vorzugsweise werden dabei jedoch kleinere Schwellenwerte zugrunde gelegt, so dass die Regelung durch eine Hysterese beruhigt wird. Die Schwellenwerte können abhängig sein von weiteren Größen der Fahrdynamik, wie z.B. der Fahrgeschwindigkeit $v_x$ oder dem Fahrbahnreibwert $\mu$. Mit abnehmender Fahrgeschwindigkeit werden die Schwellenwerte vergrößert, mit abnehmendem Fahrbahnreibwert entsprechend verringert.
Die Blöcke 60, 62 sind über ein Oder-Glied 66 mit einer Aktivierungslogik 68 zum Aktivieren des Regelsystems verbunden. In die Aktivierungslogik 68 gehen der Rädlenkwinkel der Vorderachse $\delta_V$, der begrenzte Radlenkwinkel der Vorderachse $\delta_{V,\text{lim}}$, dessen Ermittlung später noch beschrieben wird und das Untersteuer-Flag 64 als Eingangssignal ein.
Bei der Erfüllung der Bedingungen

$$\delta_{V,\text{lim}} < |\delta_V|$$
$$\textbf{und } \texttt{Untersteuer-Flag = 1}$$

wird die Lenkmomentregelung 52 aktiviert, indem ein Untersteuer-Aktiv-Flag, welches das Ausgangssignal der Aktivierungslogik 68 darstellt, auf den Wert 1 gesetzt.
Die Lenkmomentregelung 52 wird beendet und das Ausgabesignal Untersteuer-Aktiv-Flag der Aktivierungslogik 68 auf 0 gesetzt, wenn die folgenden Bedingungen zutreffen:

$$\delta_{V,\text{lim}} > |\delta_V|$$

**oder** Untersteuer-Flag = 0

oder nach Beendigungsbedingungen, die eine Beendigung nach Ablauf einer vorgegebenen Zeit vorsehen.

Jeder der Regler 50, 52 enthält eine Ermittlungseinheit 70 zur Lenkwinkelbegrenzung, der die Gierrate $d\psi/dt$, die Längsbeschleunigung $a_x$, die Querbeschleunigung $a_y$, die Fahrzeuggeschwindigkeit $v_x$ als Eingangsgrößen zugeführt wird.

Die Lenkwinkelbegrenzung dient dazu, eine Begrenzung des Radlenkwinkels an der Vorderachse zu bestimmen. Hierzu wird das folgende Polynommodell der Seitenkraft verwendet

$$F_y = \begin{cases} -\left( C_{a0} F_z \alpha - \text{sign}(\alpha) \dfrac{C_{\alpha 0}^2 F_z^2}{4\mu_0 F_z} \alpha^2 \right) \sqrt{1 - \left( \dfrac{F_x}{\mu_0 F_z} \right)^2} & , |\alpha| < \dfrac{2\mu_0}{C_{\alpha 0}} \\ \\ -\text{sign}(\alpha)\mu_0 F_z \sqrt{1 - \left( \dfrac{F_x}{\mu_0 F_z} \right)^2} & , |\alpha| \geq \dfrac{2\mu_0}{C_{\alpha 0}} \end{cases} \qquad (3.7)$$

Bezieht man die Seitenkraft $F_y$ auf die Aufstandskraft $F_z$, dann erhält man aus dem Modell (3.7) die in Fig. 8 dargestellte Kennlinie des Kraftschlussbeiwerts in Querrichtung. Der Kraftschlussbeiwert erreicht bei dem Schräglaufwinkel

$$\alpha_{\text{lim}} = \mu_0 \frac{2}{C_{\alpha 0}} \qquad (3.8)$$

sein Maximum. Mit (3.8) kann aus (3.4) der zum maximalen Kraftschlussbeiwert korrespondierende Lenkwinkel bestimmt werden als

$$\delta_V \Big|_{\alpha_V = \alpha_{\text{lim}}} = \frac{l_V}{v_x} \dot{\psi} - \text{sign}(\alpha_V)\mu_0 \frac{2}{C_{\alpha 0}} + \beta . \qquad (3.9)$$

Der Fahrbahnreibwert $\mu_0$ und der Schwimmwinkel $\beta$ ist im Fahrzeug messtechnisch nicht wirtschaftlich zu erfassen. Für den Schwimmwinkel gilt bei Untersteuern näherungsweise

$$\beta \approx 0. \qquad (3.10)$$

Eine Abschätzung des Fahrbahnreibwerts auf Basis der Beschleunigungen des Fahrzeugschwerpunkts (CoG Center of Gravity) bzw. der Vorder- und Hinterachse ergibt

$$\hat{\mu}_0 = \max\left( \mu_{VA}, \mu_{CoG}, \mu_{HA} \right), \qquad (3.11)$$

mit der Kraftschlussausnutzung für die Vorderachse

$$\mu_{VA} = \frac{\sqrt{\left(a_x - l_V \dot\psi^2\right)^2 + \left(a_y + l_V \ddot\psi\right)^2}}{g}, \qquad (3.12)$$

der Kraftschlussausnutzung im Fahrzeugschwerpunkt

$$\mu_{CoG} = \frac{\sqrt{a_x^2 + a_y^2}}{g} \qquad (3.13)$$

und der Kraftschlussausnutzung an der Hinterachse

$$\mu_{HA} = \frac{\sqrt{\left(a_x + l_H \dot\psi^2\right)^2 + \left(a_y - l_H \ddot\psi\right)^2}}{g}. \qquad (3.14)$$

Unter Berücksichtigung des Zusammenhangs der Vorzeichen von Schräglaufwinkel und Querbeschleunigung

$$\mathrm{sign}(\alpha_{\lim}) = -\mathrm{sign}(a_y) \qquad (3.15)$$

ergibt sich die gesuchte Begrenzung für den Radlenkwinkel an der Vorderachse betragsmäßig zu

$$\delta_{V,\lim} = \frac{l_V}{v_x}\left|\dot\psi\right| + \frac{2}{C_{\alpha 0}}\hat\mu_0 \qquad (3.16)$$

Der Parameter $C_{\alpha 0}$ kann abhängig sein vom Fahrbahnreibwert und muss im Fahrversuch appliziert werden.
Die Annahme für die Berechnung der Lenkwinkelbegrenzung war nach (3.10) ein kleiner Schwimmwinkel. Es muss angenommen werden, dass sich das Fahrzeug zunehmend eindreht und sich damit der Schwimmwinkel vergrößert. Daher darf die Begrenzung nur für eine gewisse Zeit (vorzugsweise 4s) vorgenommen werden. Bei einem haptischen System muss danach die Anhebung des Lenkmoments zurückgenommen werden. Bei einer Überlagerungslenkung wird nach dieser Zeit der Zusatzlenkwinkel wieder reduziert.
Der entsprechend 3.16 berechnete begrenzte Radlenkwinkel $\delta_{V,\lim}$ wird der Aktivierungslogik 68 zur Verfügung gestellt, die anhand der zuvor beschriebenen Bedingungen die Lenkmomentregelung 52 aktiviert oder beendet.
Zur Lenkmoment- bzw. Lenkwinkelregelung durchläuft der aktuelle Radlenkwinkel $\delta_V$ der Vorderachse mit umgekehrtem Vorzeichen ein Übertragungsglied 72 mit Totzone. Die Totzone ist definiert zwischen dem positiven und dem negativen Wert der aktuellen Begrenzung für den Radlenkwinkel (3.16). Ausgangsgröße des Totzonen-Übertragungsglieds 72 ist die Regelabweichung

$$e_\delta = \begin{cases} -\delta_V - \delta_{V,\mathrm{lim}} & \text{für} & -\delta_V \geq \delta_{V,\mathrm{lim}} \\[2mm] 0 & \text{für} & -\delta_V > -\delta_{V,\mathrm{lim}} \\[2mm] -\delta_V + \delta_{V,\mathrm{lim}} & \text{sonst} \end{cases} \qquad (3.17)$$

Innerhalb der Totzone ist die Regelabweichung Null, außerhalb ist sie der um die Begrenzung verminderte Wert des Radlenkwinkels $\delta_V$. Die Regelabweichung $e_\delta$ wird einem Regler 74 zugeführt. Der Regler 74 kann als einfacher P-Regler oder als dynamischer Regler ausgeführt sein. Falls eine Überlagerungslenkung (Fig.5) vorhanden ist, kann die Soll-Radlenkwinkeländerung $\Delta\delta_{soll}$ auch als Vorsteuerung im Sinne einer Störgrößenaufschaltung für die Lenkmomentregelung des Lenkmomentenreglers 52 genutzt werden, entsprechend der Darstellung in Figur 6. Die Reglerausgangsgröße $u_M$ bzw. $u_{\Delta\delta}$ wird ggfs. in seiner Höhe und seinem Anstieg durch ein Begrenzungsglied 76 eingeschränkt. Die Parameter des Reglers 74 und des Begrenzungsglieds 76 sind in Abhängigkeit von dem Fahrzeug einzustellen. Eine Begrenzung unter Berücksichtigung des aktuellen Fahrerhandmoments ist ebenfalls möglich.

Bezugszeichenliste

| | |
|---|---|
| $a_x$ | Längsbeschleunigung, ggfs geschätzt aus Raddrehzahlsignalen |
| $p_B$ | Bremsdruck, 1x Fahrer, 4x Räder ggfs geschätzt |
| $d\psi/dt, \dot{\psi}$ | Gierrate |
| $a_y$ | Querbeschleunigung |
| $v_x$ | Fahrzeuggeschwindigkeit, geschätzt aus Raddrehzahlsignalen |
| $\delta_L$ | Lenkradwinkel |
| $\delta_V$ | Radlenkwinkel Vorderachse |
| $\delta_{V,\mathrm{lim}}$ | Begrenzung Radlenkwinkel Vorderachse |
| $\delta_{V,ref}$ | Referenzwert Radlenkwinkel Vorderachse |
| $\Delta\delta_{soll}$ | Soll-Radlenkwinkeländerung Vorderachse |
| $\delta_H$ | Radlenkwinkel Hinterachse |
| $\delta_{H,soll}$ | Soll-Radlenkwinkel Hinterachse |
| $M_H$ | Fahrerhandmoment am Lenkrad |
| $M_{DSR}$ | Soll-Lenkmoment |
| $\beta$ | Schwimmwinkel |
| $\alpha$ | Schräglaufwinkel |
| $\alpha_{\mathrm{lim}}$ | Schräglaufwinkel beim Seitenkraftmaximum bzw. Kraftschlussbeiwertmaximum |
| $\Delta\alpha$ | Schräglaufwinkeldifferenz Vorderachse - Hinterachse $\alpha_V$-$\alpha_H$ |
| $F_y$ | Seitenkraft |
| $F_z$ | Aufstandskraft |
| $\mu_0$ | Fahrbahnreibwert |
| $\mu_y$ | Kraftschlussbeiwert in Querrichtung |
| $\mu_{y,max}$ | Kraftschlussbeiwertmaximum |
| $C_{\alpha 0}$ | Anfangssteigung Kraftschlussbeiwert-Schräglaufwinkel-Kurve |
| EG | Eigenlenkgradient |
| I | Radstand |
| $l_V$ | Abstand Fahrzeugschwerpunkt - Vorderachse |
| $l_H$ | Abstand Fahrzeugschwerpunkt - Hinterachse |
| $e_\delta$ | Regelabweichung |
| 10 | Vorderachse |
| 12 | Hinterachse |
| 14 | Drehmomentsensor |
| 16 | Servomotor |
| 18 | Lenksäule |

| 20 | Lenkrad |
|---|---|
| 22 | Lenkgetriebe |
| 24 | Räder |
| 26 | Räder |
| 28 | Gcc Regler |
| 30 | Lenkwinkelsensor |
| 32 | Lenkwinkelsensor |
| 34 | Getriebe |
| 36 | Hinterachslenkeinheit |
| 40 | Überlagerungsgetriebe |
| 42 | Lenkwinkelsensor |
| 44 | Lenkradmotor |
| 50 | Lenkwinkelregler |
| 52 | Lenkmomentregler |
| 60 | Block |
| 62 | Block |
| 64 | Untersteuer-Flag |
| 66 | Oder-Glied |
| 68 | Aktivierungslogik |
| 70 | Ermittlungseinheit |
| 72 | Übertragungsglied |
| 74 | Regler |
| 76 | Begrenzungsglied |

**Patentansprüche**

1. Verfahren zum Ermitteln eines optimalen Lenkwinkels in Fahrsituationen eines Fahrzeugs, dass ein erster Anteil bei der Ermittlung berücksichtigt wird, der den Kraftschlussbeiwert in Querrichtung wiedergibt, dass ein zweiter Anteil berücksichtigt wird, der einen Kinematikanteil wiedergibt und dass ein dritter Anteil berücksichtigt wird, der den Schwimmwinkel wiedergibt und dass der Lenkwinkel ($\delta_{V,\text{lim}}$) durch Addition des Kraftschlussbeiwertanteils, des Kinematikanteils und des Schwimmwinkels ermittelt wird **dadurch gekennzeichnet, dass** der Schwimmwinkel bei Untersteuersituationen des Fahrzeugs nach der Beziehung $\beta \approx 0$ geschätzt wird.

2. Verfahren nach Anspruch 1,
   **dadurch gekennzeichnet,**
   **dass** der erste Anteil einen Fahrbahnreibwert $\hat{\mu}_0 = \max(\mu_{VA}, \mu_{CoG}, \mu_{HA})$ nach mindestens einer der folgenden Beziehungen berücksichtigt,

   mit der Kraftschlussausnutzung für die Vorderachse $\mu_{VA} = \dfrac{\sqrt{\left(a_x - l_V \dot{\psi}^2\right)^2 + \left(a_y + l_V \ddot{\psi}\right)^2}}{g}$ , oder

   mit der Kraftschlussausnutzung im Fahrzeugschwerpunkt $\mu_{CoG} = \dfrac{\sqrt{a_x^2 + a_y^2}}{g}$ , oder

   mit der Kraftschlussausnutzung an der Hinterachse

   oder $\mu_{HA} = \dfrac{\sqrt{\left(a_x + l_H \dot{\psi}^2\right)^2 + \left(a_y - l_H \ddot{\psi}\right)^2}}{g}$ .

3. Verfahren nach einem der Ansprüche 1 bis 2,
   **dadurch gekennzeichnet,**
   **dass** der Lenkwinkel betragsmäßig nach der Beziehung

$$\delta_{V,\lim} = \frac{l_V}{v_x}|\dot{\psi}| + \frac{2}{C_{\alpha 0}}\hat{\mu}_0$$

ermittelt wird.

**4.** Verfahren nach einem der Ansprüche 1 bis 3,
**dadurch gekennzeichnet,**
**dass** der Lenkwinkel $\delta_{V,\lim}$ oder ein mit einem Faktor k multiplizierter Lenkwinkel $\delta_{V,\lim}$ als Sollwert für eine Lenkwinkelregelung oder eine Lenkmomentregelung verwendet wird.

**5.** Verfahren nach einem der Ansprüche 1 bis 2,
**dadurch gekennzeichnet,**
**dass** eine Lenkmomentregelung nach der Beziehung $\delta_{V,\lim} < |\delta_V|$ aktiviert wird.

**6.** Verfahren nach einem der vorangegangenen Ansprüche,
**dadurch gekennzeichnet,**
**dass** eine Lenkmomentregelung nach der Beziehung $\delta_{V,\lim} > |\delta_V|$ deaktiviert wird..

**7.** Vorrichtung zum Ermitteln eines optimalen Lenkwinkels in Unterstreuersituationen eines Fahrzeugs,
**gekennzeichnet durch**,
eines Ermittlungseinheit (70) zum Ermitteln eines stabilisierenden Lenkwinkels unter Berücksichtigung eines modellbasierten Kraftschlussbeiwertanteils, eines modellbasierten Kinematikanteil und eines Schwimmwinkels.

**Claims**

**1.** Method for determining an optimum steering angle in driving situations of a vehicle, a first portion which represents the adhesion coefficient in the lateral direction being taken into account in the determination, a second portion which represents a kinematic portion being taken into account, and a third portion which represents the attitude angle being taken into account, and the steering angle ($\delta_{v,\lim}$) being determined by adding the portion of the adhesion coefficient, the kinematic portion and the attitude angle, **characterized in that** during understeering situations of the vehicle the attitude angle is estimated according to the relationship $\beta \approx 0$.

**2.** Method according to Claim 1, **characterized in that** the first portion takes into account a coefficient of friction of the underlying surface
$\hat{\mu}_0 = \max(\mu_{VA}, \mu_{CoG}, \mu_{HA})$ according to at least one of the following relationships,
utilizing the adhesion for the front axle

$$\mu_{VA} = \frac{\sqrt{(a_x - l_V\dot{\psi}^2)^2 + (a_y + l_V\ddot{\psi})^2}}{g}$$

,

or

utilizing the adhesion at the center of gravity of the vehicle $\mu_{CoG} = \dfrac{\sqrt{a_x^2 + a_y^2}}{g}$ or

,

utilizing the adhesion at the rear axle

$$\mu_{HA} = \frac{\sqrt{\left(a_x + l_H\dot\psi^2\right)^2 + \left(a_y - l_H\ddot\psi\right)^2}}{g}$$

.

3. Method according to either of Claims 1 and 2, **characterized in that** the steering angle is determined in terms of absolute value according to the relationship

$$\delta_{V,\lim} = \frac{l_V}{v_x}\left|\dot\psi\right| + \frac{2}{C_{\alpha 0}}\hat\mu_0$$

.

4. Method according to one of Claims 1 to 3, **characterized in that** the steering angle $\delta_{v,\lim}$ or a steering angle $\delta_{v,\lim}$ which is multiplied by a factor k is used as a setpoint value for a steering angle control means or a steering torque control means.

5. Method according to either of Claims 1 and 2, **characterized in that** a steering torque control means is activated according to the relationship

$$\delta_{v,\lim} < |\delta_v| .$$

6. Method according to one of the preceding claims, **characterized in that** a steering torque control means is deactivated according to the relationship

$$\delta_{v,\lim} < |\delta_v| .$$

7. Device for determining an optimum steering angle in understeer situations of a vehicle, **characterized by** a determining unit (70) for determining a stabilizing steering angle taking into account a model-based portion of the adhesion coefficient, a model-based kinematic portion and an attitude angle

**Revendications**

1. Procédé pour déterminer un angle de direction optimal dans des situations de conduite d'un véhicule, selon lequel une première composante qui restitue le coefficient d'adhérence dans la direction transversale est prise en compte lors de la détermination, selon lequel une deuxième composante qui restitue une composante cinématique est prise en compte et selon lequel une troisième composante qui restitue l'angle de flottement est prise en compte, et selon lequel l'angle de direction ($\delta_{v,\lim}$) est déterminé en additionnant la composante coefficient d'adhérence, la composante cinématique et l'angle de flottement, **caractérisé en ce que** dans les situations de sous-virage du véhicule, l'angle de flottement est estimé d'après la relation ß ≈ 0.

2. Procédé selon la revendication 1,
**caractérisé en ce**
que la première composante tient compte d'un coefficient de frottement de la chaussée $\mu_0 = \max(\mu_{VA}, \mu_{CoG}, \mu_{HA})$ selon au moins l'une des relations suivantes, avec l'utilisation de l'adhérence pour l'essieu avant

$$\mu_{VA} \;=\; \frac{\sqrt{(a_x - l_V\,\dot\Psi^2)^2 + (a_y + l_V\,\dot\Psi^2)^2}}{g}, \quad \text{ou}$$

avec l'utilisation de l'adhérence au centre de gravité du véhicule $\mu_{CoG} \;=\; \dfrac{\sqrt{a_x^2 + a_y^2}}{g}$, ou

avec l'utilisation de l'adhérence au niveau de l'essieu arrière

$$\mu_{HA} \;=\; \frac{\sqrt{(a_x + l_H\,\dot\Psi^2)^2 + (a_y - l_H\,\dot\Psi^2)^2}}{g}.$$

**3.** Procédé selon l'une des revendications 1 à 2,
**caractérisé en ce**
**que** la valeur de l'angle de direction est déterminée d'après la relation

$$\delta_{V,\mathrm{lim}} \;=\; \frac{l_V}{l_H}\,|\dot\Psi| \;+\; \frac{2}{c_{\alpha 0}}\,\mu_0.$$

**4.** Procédé selon l'une des revendications 1 à 3,
**caractérisé en ce**
**que** l'angle de direction $\delta_{V,\mathrm{lim}}$ ou un angle de direction $\delta_{V,\mathrm{lim}}$ multiplié par un facteur k est utilisé comme valeur de consigne pour une régulation de l'angle de direction ou une régulation du moment de direction.

**5.** Procédé selon l'une des revendications 1 à 2,
**caractérisé en ce**
**qu'**une régulation du moment de direction est activée d'après la relation

$$\delta_{V,\mathrm{lim}} \;<\; |\delta_V|.$$

**6.** Procédé selon l'une des revendications précédentes,
**caractérisé en ce**
**qu'**une régulation du moment de direction est désactivée d'après la relation

$$\delta_{V,\mathrm{lim}} \;>\; |\delta_V|.$$

**7.** Dispositif pour déterminer un angle de direction optimal dans des situations de sous-virage d'un véhicule,
**caractérisé par**
une unité de détermination (70) pour déterminer un angle de direction stabilisateur en tenant compte d'une composante coefficient d'adhérence basée sur un modèle, d'une composante cinématique basée sur un modèle et d'un angle de flottement.

**Fig. 1**

- 24
- 22 Lenkgetriebe
- 10
- 34 Reduziergetriebe
- 24
- Rad
- 14 Drehmomentsensor
- $M_H$
- Servomotor 16
- 18
- $M_{DSR}$
- 32 Lenkradwinkelsensor
- $\delta_L$
- GCC-Regler 28
- 20 Lenkrad
- Hinterachs- 30 Lenkwinkelsensor
- $\delta_H$
- $\delta_{H\,soll}$
- 12
- Hinterachslenkeinheit
- 26
- 26

**Fig. 2**

- 24
- 10
- 34 Reduziergetriebe
- 24
- Lenkgetriebe
- Rad
- 42 Vorderachs-Lenkwinkelsensor
- $\delta_V$
- 18b
- Servomotor 16
- 40 Überlagerungsgetriebe
- Motor 44
- $\Delta\delta_{soll}$
- $M_{DSR}$
- 18a
- $M_H$
- 14 Drehmomentsensor
- 32 Lenkradwinkelsensor
- $\delta_L$
- GCC-Regler 28
- 20 Lenkrad
- Hinterachs- 30 Lenkwinkelsensor
- $\delta_H$
- $\delta_{H\,soll}$
- 1
- 12
- Hinterachslenkeinheit
- 36
- 26
- 26

**Fig. 3**

**Fig. 4**

**Fig. 5**

*60*

d.../dt
a,
v,
δ,
δ,
δ,
a,

ESP-Untersteuer-
Erkennung

*66*

OR

*64*
Untersteuer-
Flag

v,
δ,
δ,

\u-Untersteuer-
Erkennung

*62*

*68*
Aktivierungslogik

δ,

Untersteuer-
Aktiv-Flag

dψ/dt
a,
a,
v,

*70*
Lenkwinkel-
Begrenzung

δ, lim

*72*
Totzone

δ,

-1

−δ, lim

δ, lim

e,

*74*
Regler

u,

⊗

*76*
Gradienten-
und Maximalwert-
Begrenzung

Δδ,

**Fig. 6**

*74*
Regler

Δδ,soll

Störgrößen-
Aufschaltung

e,

Lenkmoment-
Regelung

u,

**Fig. 7**

$$\beta = \arctan \frac{v_y}{v_x} \qquad \text{Schwimmwinkel}$$

$$\alpha_V = -\delta_V + \beta + \frac{l_V}{v_x}\dot{\psi} \qquad \text{Schräglaufwinkel VA}$$

$$\alpha_H = -\delta_H + \beta - \frac{l_H}{v_x}\dot{\psi} \qquad \text{Schräglaufwinkel HA}$$

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005054039 A1
- WO 2005054040 A1
- DE 102005036708 A1
- DE 10039782 A1